Europäisches Patentamt

European Patent Office

Office européen des brevets

(11) Numéro de publication: **0 012 489**
**A1**

## (12) DEMANDE DE BREVET EUROPEEN

(21) Numéro de dépôt: **79200758.5**

(22) Date de dépôt: **12.12.79**

(51) Int. Cl.³: **F 16 B 15/00**

---

(30) Priorité: **15.12.78 BE 192360**

(43) Date de publication de la demande: **25.06.80**
**Bulletin 80/13**

(84) Etats contractants désignés: **AT CH DE FR GB IT LU NL SE**

(71) Demandeur: **Enthoven, Peter, Lange Heidestraat, 34, Ottenburg (BE)**

(72) Inventeur: **Enthoven, Peter, Lange Heidestraat, 34, Ottenburg (BE)**

(74) Mandataire: **Pirson, Jean et al, C/O Bureau GEVERS S.A. 7, rue de Livourne, B-1050 Brussels (BE)**

(54) Elément d'assemblage, panneaux réalisés à l'aide de ces éléments et caisses produites à partir de ces panneaux et éléments.

(57) Elément d'assemblage permettant de solidariser entre elles des planches (3) et de réaliser des panneaux (4, 5) notamment en vue de la fabrication de caisses, caractérisé en ce qu'il consiste en un feuillard (1) portant des dents (2) dressées verticalement par rapport au plan général du feuillard.

EP 0012 489 A1

ACTORUM AG

"Elément d'assemblage, panneaux réalisés à l'aide de ces éléments et caisses produites à partir de ces panneaux et éléments"

L'invention concerne un élément d'assemblage permettant de solidariser entre elles des planches et de réaliser des panneaux, notamment en vue de la fabrication de caisses, ainsi qu'un procédé de réalisation de panneaux par solidarisation de planches à l'aide d'éléments d'assemblage, selon l'invention.

Dans la description de l'élément d'assemblage et du procédé selon l'invention il sera question de panneaux. Il faut entendre par là un assemblage de planches disposées côte à côte et assemblées au moins d'un côté, par deux planches transversales qui sont clouées aux planches formant le panneau.

De tels panneaux peuvent être réalisés pour être utilisés en temps que tels ou former la base de caisses déterminant des volumes correspondant à des parallélépipèdes rectangles.

Quelles que soient les dimensions de la caisse, l'épaisseur d'un panneau qui la constitue est déterminée par l'épaisseur des planches disposées côte à côte titué uniquement par l'épaisseur des planches formant le panneau est loin d'être négligeable. D'autre part, le clouage des planches disposées côte à côte aux planches transversales qui immobilisent ces planches entre elles constitue une opération longue et coûteuse.

L'invention a donc pour but de proposer un élément d'assemblage et un procédé d'utilisation de ceux-ci qui permet, non seulement, un travail rapide et entièrement mécanisé mais qui, de plus, permet de réaliser de substantielles économies en matière de volume ou de cubage.

A cet effet, l'élément d'assemblage selon l'invention consiste en un feuillard portant des dents dressées verticalement par rapport au plan général du feuillard.

0012489

Une particularité de l'invention réside dans le fait que le feuillard précité se présente sous la forme d'une bande continue.

L'invention concerne, comme il a déjà été dit, également un procédé de réalisation de panneaux par solidarisation de planches à l'aide d'éléments d'assemblage selon l'invention, procédé qui permet, non seulement la réalisation mécanisée des panneaux eux-mêmes mais l'assemblage de ceux-ci sous un angle de 90° par exemple de telle sorte que, grâce à ce procédé et à l'élément d'assemblage selon l'invention une économie considérable de main-d'oeuvre est réalisée pour produire un ensemble de quatre ou de six panneaux articulés entre eux et disposés à angle droit pour donner naissance immédiatement à quatre ou six panneaux assemblés destinés à former une caisse ou un volume analogue.

D'autres détails et avantages de l'invention ressortiront de la description qui sera donnée ci-après d'un élément d'assemblage, des panneaux réalisés à l'aide de ceux-ci et des caisses produites à partir de ces panneaux et éléments, selon l'invention.

La figure 1 est une vue en perspective d'une longueur déterminée d'un élément d'assemblage selon l'invention.

La figure 2 est une vue en plan d'un assemblage de planches solidarisé par des éléments d'assemblage selon l'invention.

La figure 3 est une vue en coupe selon la ligne III-III de la figure 2.

La figure 4 montre, en coupe, et à une plus grande échelle, un angle de caisse assemblé conformément au procédé et à l'aide de l'élément d'assemblage selon l'invention.

La figure 5 montre, en perspective, une forme de réalisation particulière.

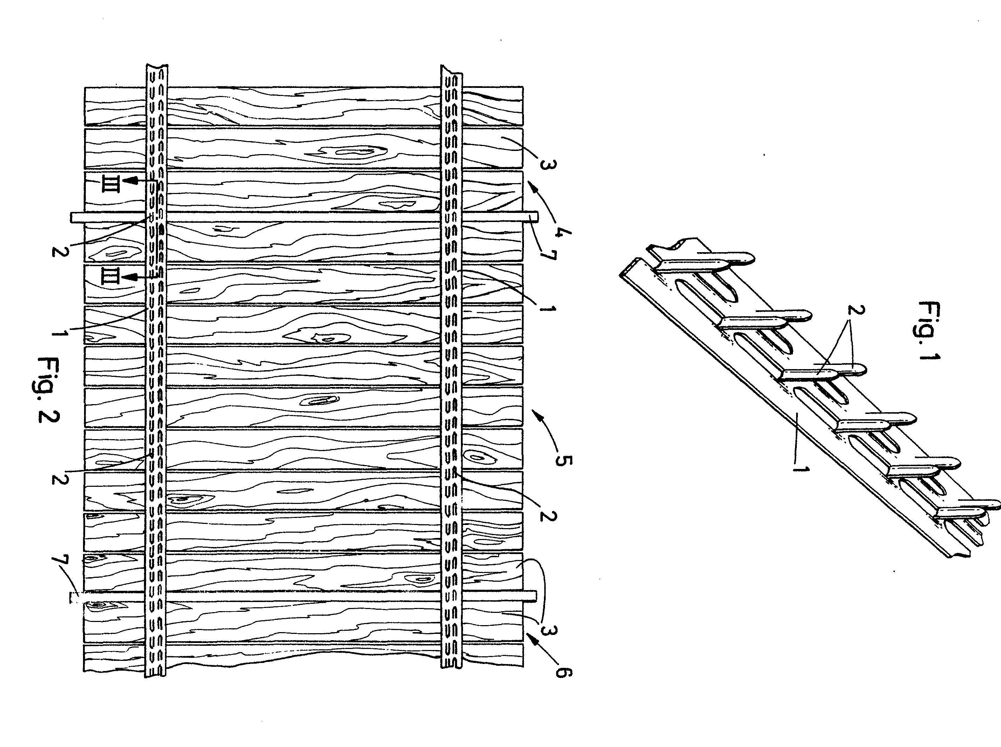

L'élément d'assemblage selon la figure 1 se présente sous la forme d'un feuillard 1 hérissé de dents 2

3 0012489

disposées, en l'occurence, selon deux rangées parallèles.

Dans d'autres formes de réalisation, non représentées aux figures, on peut prévoir un nombre plus élevé de rangées parallèles de dents et cela toujours en fonction des dimensions des planches utilisées.

Les dents sont découpées dans le feuillard 1 et redressées à la verticale par rapport à celui-ci et présentent selon une coupe transversale une forme légèrement arquée.

Une particularité du feuillard selon l'invention est de pouvoir être débité à partir d'un rouleau et donc dans des longueurs souvent fort importantes.

L'élément d'assemblage ou feuillard 1 est enfoncé à la presse transversalement par rapport au sens dans lequel s'étendent les planches 3 formant les panneaux 4, 5 et 6 (figure 2).

Pour réaliser chacun des panneaux 4, 5 et 6, représentés à titre d'exemple à la figure 2, on dispose un certain nombre de planches 3 sur une table ou un bâti approprié de manière que l'élément d'assemblage formé par le feuillard 1 puisse être enfoncé à la presse dans le bois formant les planches 3.

En enfonçant le feuillard, de part et d'autre des planches 3, sur toute la profondeur des dents 2, on réalise un assemblage étonnamment solide des planches 3, en donnant naissance, de la sorte, à des panneaux extrêmement résistants.

On remarquera que, dans les panneaux réalisés selon l'invention, les planches transversales généralement utilisées pour renforcer l'assemblage font totalement défaut, ce qui constitue une économie de matière, de volume et également une importante économie de main-d'oeuvre.

En outre, en vue de réaliser un assemblage à charnière des panneaux 4, 5 et 6, on dispose, entre chacun de ces panneaux, au droit des éléments d'assemblage, des éléments métalliques 7 dont la largeur est sensiblement égale, mais de préférence, supérieure à l'épaisseur d'une planche 3. Ces éléments métalliques 7 constituent donc d'une certaine manière des entretoises au stade de la fabrication, mais ont un but très précis qui est l'écrasement des dents 2 au moment où la presse enfonce le feuillard 1 dans les planches 3.

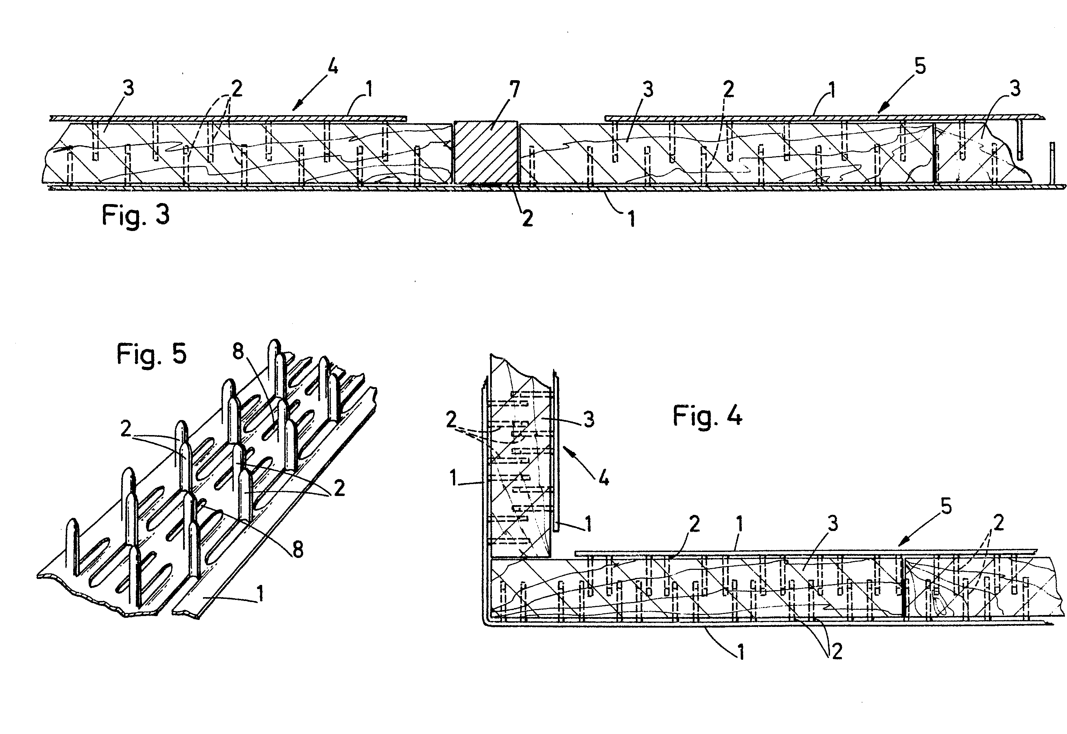

On enlève ensuite les éléments ou entretoises métalliques 7 et on obtient un assemblage à charnière comme montré par la coupe selon la figure 3.

Ceci permet de passer ensuite au stade suivant qui est la réalisation, sans autre opération, d'une caisse en forme de parallélépipède rectangle quelconque. Un angle d'une telle caisse est montré en coupe agrandie, à la figure 4.

Grâce à la disparition des dents 2, sur la largeur de l'élément ou entretoise métallique 7, il est possible de replier le panneau 4 par rapport au panneau 5, le panneau 5 par rapport au panneau 6, etc. Ceci permet de passer directement au stade du montage de quatre parois, ou plus, de la caisse, à laquelle ne doivent plus être fixés qu'éventuellement, soit le fond et le couvercle, soit les faces latérales de la caisse.

L'écrasement des dents pourrait être supprimé et, dans ce cas, il est suffisant de prévoir, de distance en distance, une suppression de ces dents sur le feuillard métallique constituant l'élément d'assemblage.

La suppression des dents peut aussi consister dans le rabattement préalable de celles-ci au lieu de leur écrasement.

Dans certains cas particuliers on peut aussi envisager de déplier le feuillard sans suppression aucune des dents qui pénétreront alors dans le bois à l'endroit de la "charnière".

La figure 5 montre un élément d'assemblage présentant dans le sens longitudinal une ligne de moindre résistance X-X correspondant à l'axe géométrique des perforations 8.

Un tel élément d'assemblage peut être uti-

0012489

lisé pour recouvrir l'angle formé entre deux panneaux, ou un panneau et un couvercle ou un fond.

Dans l'exemple précité est décrite la réalisation d'une caisse à partir de panneaux réalisés à l'aide de l'élément d'assemblage selon l'invention et selon la technique conforme au procédé selon la même invention.

Il est évident que la technique qui est à la base de la présente demande de brevet peut être utilisée pour produire tous types de panneaux de toutes dimensions quelle que soit leur destination.

En outre les panneaux formés selon la technique décrite ci-dessus ne doivent pas être nécessairement formés uniquement de planches mais peuvent résulter de la superposition de planches et d'agglomérés de toute nature, en combinaison ou non, avec des produits de recouvrement, des toiles, des feuilles de matière plastique, des éléments publicitaires, des tôles métalliques, etc.

Il a été clairement démontré que l'invention réside dans la production de panneaux, qui peuvent être assemblés sous forme de parois pouvant donner avantageusement naissance à des caisses, en faisant usage d'un feuillard continu, ou qui peut de toute façon être livré en très grande longueur.

Un avantage important de cette technique originale est la robustesse considérablement accrue pour un cubage réduit d'une caisse ou d'un élément d'emballage analogue. Il est alors évident que la rapidité d'exécution engendre une économie non négligeable.

Il est cependant évident que l'invention n'est pas limitée à la forme d'exécution qui vient d'être décrite et que bien des modifications pourraient y être apportées sans sortir du cadre de la présente demande de brevet.

REVENDICATIONS

1. Elément d'assemblage permettant de solidariser entre elles des planches et de réaliser des panneaux, notamment en vue de la fabrication de caisses, caractérisé en ce qu'il consiste en un feuillard portant des dents dressées verticalement par rapport au plan général du feuillard.

2. Elément d'assemblage selon la revendication 1, caractérisé en ce qu'il comporte au moins une rangée longitudinale de dents.

3. Elément d'assemblage selon la revendication 1, caractérisé en ce que, dans chaque rangée longitudinale, les dents sont séparées entre elles d'une distance légèrement supérieure à la hauteur d'une dent.

4. Elément d'assemblage selon l'une quelconque des revendications 1 à 3, caractérisé en ce que le feuillard se présente sous la forme d'une bande continue.

5. Elément d'assemblage selon l'une quelconque des revendications 1 à 4, caractérisé en ce que chaque dent, découpée dans la matière dont est constitué le feuillard, présente une section transversale arquée.

6. Elément d'assemblage selon l'une quelconque des revendications 1 à 5, caractérisé par une ligne de moindre résistance dans le sens longitudinal permettant le pliage à 90° par exemple selon cette ligne de moindre résistance de l'élément d'assemblage.

7. Procédé de réalisation de panneaux par solidarisation de planches à l'aide d'éléments d'assemblage selon l'une quelconque des revendications 1 à 5, caractérisé en ce qu'il consiste à déposer côte à côte les planches à assembler, à dérouler transversalement par rapport à ces planches, au moins sur une face desdites planches, une longueur de feuillard formant l'élément d'assemblage précité et à enfoncer cet élément d'assemblage dans les planches précitées.

8. Procédé selon la revendication 7, caractérisé en ce que, lorsque les panneaux réalisés sont destinés à former des caisses, on dispose, à hauteur desdits éléments d'assemblage, entre deux planches constituant les planches d'angle de la caisse un élément métallique, on enfonce l'élément d'assemblage dans les planches et on écrase dans le même temps les dents de l'élément d'assemblage contre l'élément métallique précité, de telle sorte que les panneaux réalisés de part et d'autre de la partie de l'élément métallique dans laquelle les dents ont été écrasées peuvent être diposés sous un angle de 90° par exemple.

9. Procédé selon la revendication 7, caractérisé en ce que, lorsque les panneaux réalisés sont destinés à former des caisses, on prévoit sur l'élément métallique précité une zone dont les dents sont absentes et dont la longueur correspond sensiblement à l'épaisseur des planches à assembler, de telle sorte que les panneaux réalisés de part et d'autre de la zone de l'élément métallique dont les dents sont absentes peuvent être disposés sous un angle de 90° par exemple.

10. Procédé selon la revendication 7, caractérisé en ce que, lorsque les panneaux réalisés sont destinés à former des caisses, on déroule une longueur du feuillard constituant l'élément d'assemblage et on enfonce celui-ci dans les planches disposées côte à côte sans éliminer les dents précitées entre les planches d'angle du panneau, à l'endroit où le feuillard est replié sur 90°.

0012489

Fig. 1

Fig. 2

Fig. 3

Fig. 5

Fig. 4

0012489

Office européen
des brevets

**RAPPORT DE RECHERCHE EUROPEENNE**

0012489

Numéro de la demande

EP 79 200 758.5

## DOCUMENTS CONSIDERES COMME PERTINENTS

| Catégorie | Citation du document avec indication, en cas de besoin, des parties pertinentes | Revendication concernée |
|---|---|---|
| X | DE - B - 1 400 753 (AUTOMATED BUILDING COMPONENTS) <br> * colonne 1, lignes 7, 13; fig. 1 * <br> --- | 1,2,7 |
| X | DE - U - 1 992 797 (SANFORD) <br> * page 16; fig. 6, paragraph 3 * <br> --- | 1,8 |
| X | DE - U - 7 017 089 (ANDREWS) <br> * fig. 1 * <br> -- | 1,5 |
| X | GB - A - 1 218 076 (CARR FASTENER) <br> * fig. 1 * <br> -- | 1,4 |
| X | GB -A- 1 287 739 (TIMBER RESEARCH AND DEVELOPMENT ASSOCIATION) <br> * fig. 1 * <br> -- | 1,3 |
| X | GB - A - 1 442 077 (E. CORNER) <br> * fig. 1 * <br> -- | 1 |
| X | US - A- 3 892 160 (JUREIT et al.) <br> * fig. 1 * <br> --- | 1 |
| X | US - A- 1 358 922 (BARBER) <br> * fig. 1 * <br> ---- | 1 |

**CLASSEMENT DE LA DEMANDE (Int. Cl.3)**

F 16 B 15/00

**DOMAINES TECHNIQUES RECHERCHES (Int. Cl.3)**

F 16 B 15/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| Berlin | 22-02-1980 | ZAPP |

OEB Form 1503.1 06.78